# EUROPÄISCHE PATENTSCHRIFT

(11) **EP 2 510 784 B1**
(45) Veröffentlichungstag und Bekanntmachung des Hinweises auf die Patenterteilung: **09.07.2014**
(21) Anmeldenummer: 12401055.4
(22) Anmeldetag: 02.04.2012
(51) Int. Cl.: A01M 7/00, F15B 21/04

(54) **Verteilergestänge mit variabler Faltgeschwindigkeit**
Sprayer boom with adaptive folding speed
Rampe de pulvérisation à vitesse de repliage adaptative

(30) Priorität: 14.04.2011 DE 102011002035
(43) Veröffentlichungstag der Anmeldung: 17.10.2012
(73) Patentinhaber: Amazonen-Werke H. Dreyer GmbH & Co. KG, 49205 Hasbergen (DE)
(72) Erfinder: Austermann, Stefan, 48291 Telgte (DE); Langner, Sebastian, 49088 Osnabrück (DE); Oberheide, Friedrich, 49143 Bissendorf (DE)

(56) Entgegenhaltungen:
- EP-A1- 2 186 405
- WO-A1-85/02267
- JP-A- 2004 089 012
- US-A1- 2006 255 175

## Beschreibung

Die Erfindung betrifft ein Verteilergestänge gemäß des Oberbegriffes des Patentanspruches 1.

Ein derartiges Verteilergestänge ist beispielsweise durch die EP 1 201 123 A2 bekannt. Bei diesem Verteilergestänge sind die Motoren, welche die einzelnen Gestängeabschnitte zueinander ein- und ausklappen, mit Sensorelementen versehen, die jeweils ein Endstellungssignal erzeugen. Hierdurch ist es möglich, ein ordnungsgemäßes nacheinander Ein- und Ausklappen der einzelnen Gestängeabschnitte des Verteilergestänges sicherzustellen.

Nachteiliges ist bei derartig angesteuerten Gestängeabschnitten, dass das Ein- und Ausklappen über den gesamten Ein- und Ausklappvorgang mit der gleichen Geschwindigkeit erfolgt. Hierdurch kommt es insbesondere am Ende des Einklappvorganges und/oder bei Beendigung des Einklappvorganges zu großen Kräften an den Gestängeabschnitten.

Der Erfindung liegt die Aufgabe zu Grunde, ein schnelles und dennoch schonendes Ein- und Ausklappen der einzelnen Gestängeabschnitte eines Verteilergestänges zu ermöglichen.

Diese Aufgabe wird erfindungsgemäß durch die kennzeichnenden Merkmale des Anspruches 1 gelöst.

Infolge dieser Maßnahme können entsprechend der jeweils erfassten Positionssignale zwischen den jeweiligen Endlagen der einzelnen Gestängeabschnitte des Verteilergestänges die einzelnen Gestängeabschnitte mittels der motorischen Stellelemente mit optimierter Geschwindigkeit beim Ein- und Ausklappen verschwenkt werden. Es wird somit ein schnelles Klappen, auch ein ziehharmonikaförmiges Klappen der einzelnen Gestängeabschnitte des Verteilergestänges möglich. Somit das Ein- und Ausklappen an verschiedene Einsatzbedingungen einfacher Weise anzupassen.

In einer Ausführung ist vorgesehen, dass die Sensorelemente als Potentiometer ausgebildet sind. Es lassen sich also einfach und robust ausgestaltete Sensorelemente einsetzen.

Auch ist es möglich, dass die Sensorelemente als Linearpotentiometer ausgebildet sind.

Eine vorteilhafte Anordnung der Sensorelemente ergibt sich dadurch, dass die Sensorelemente, insbesondere die Potentiometer jeweils den Gelenken zwischen zwei zueinander einklappbaren Gestängeabschnitten zugeordnet sind.

In manchen Fällen kann es sinnvoll sein, dass die Sensorelemente, insbesondere die Potentiometer jeweils den Stellelementen zwischen zwei zueinander einklappbaren Gestängeabschnitten angeordnet sind.

Ein besonders vorteilhaftes Ein- und Ausklappen der einzelnen Gestängeabschnitte des Verteilergestänges lässt sich dadurch erreichen, dass die Steuervorrichtung derart ausgelegt ist, dass aufgrund der von den Sensorelementen übermittelten Positionssignale bezüglich der Stellung der zueinander einklappbaren Gestängeabschnitte zueinander die von den motorischen Stellelemente erzeugte Klappgeschwindigkeit veränderbar ist und zwar derart, dass zu Beginn des Klappvorgang eine Beschleunigungsphase der Klappbewegung und zum Ende des Klappvorgang eine Verzögerungsphase der Klappbewegung vorgesehen ist. Hierbei können die motorischen Stellelemente als in ihrer Stellgeschwindigkeit veränder- und/oder einstellbar ausgebildet sein.

Weiterhin ist vorgesehen, dass die motorischen Stellelemente als Hydraulikzylinder ausgebildet sind, dass Temperatursensoren zur Messung der Öltemperatur des die Hydraulikzylinder Ölstromes vorgesehen sind, dass in Abhängigkeit der von den Temperatursensoren an die Steuervorrichtung gelieferten Signale eine Ansteuerung der Hydraulikzylinder derart erfolgt, dass der Einfluss der Öltemperatur kompensierbar ist. Infolge dieser Maßnahmen lässt sich beim Einsatz von als Hydraulikzylinder ausgebildeten Stellelementen der Temperatureinfluss in einfacher Weise kompensiert.

Die Sensorelemente können auch unmittelbar dem motorischen Stellelemente zugeordnet oder in diesem integriert angeordnet sein.

Weitere Einzelheiten der Erfindung sind der Beispielsbeschreibung und den Zeichnungen zu entnehmen. Hierbei zeigen
- Fig. 1: die als gezogene Feldspritze ausgebildete Verteilmaschine mit dem sich in Arbeitsstellung befindlichen Verteilergestänge in perspektivischer Ansicht und in Prinzipdarstellung,
- Fig. 2: die als gezogene Feldspritze ausgebildete Verteilmaschine mit dem in Transportstellung zusammengeklappten Verteilergestänge in perspektivischer Ansicht und in Prinzipdarstellung,
- Fig. 3: der zwei Gestängeabschnitte miteinander verbindende Gelenkbereich des Verteilergestänges in Arbeitsstellung in vergrößertem Maßstab und in der Ansicht von hinten,
- Fig. 4: der zwei Gestängeabschnitte miteinander verbindende Gelenkbereich des Verteilergestänges in Arbeitsstellung in vergrößertem Maßstab und in der Ansicht von oben,
- Fig. 5: der zwei Gestängeabschnitte miteinander verbindende Gelenkbereich des Verteilergestänges im zusammengeklappten Zustand zweier benachbarter Gestängeabschnitte in vergrößertem Maßstab und in der Ansicht von hinten,
- Fig. 6: Diagramm mit dem Klappgeschwindigkeitsverlauf zwischen den Positionen des Gestänges in Arbeits- und Transportstellung,
- Fig. 7: der zwei Gestängeabschnitte miteinander verbindende Gelenkbereich eines anderen Verteilergestänges in Arbeitsstellung in vergrößertem Maßstab und in der Ansicht von oben und
- Fig. 8: der zwei Gestängeabschnitte miteinander verbindende Gelenkbereich des Verteilergestänges gemäß Fig. 5 Verteilergestänges in zusammengeklapptem Zustand zweier benachbarter Gestängeabschnitte.

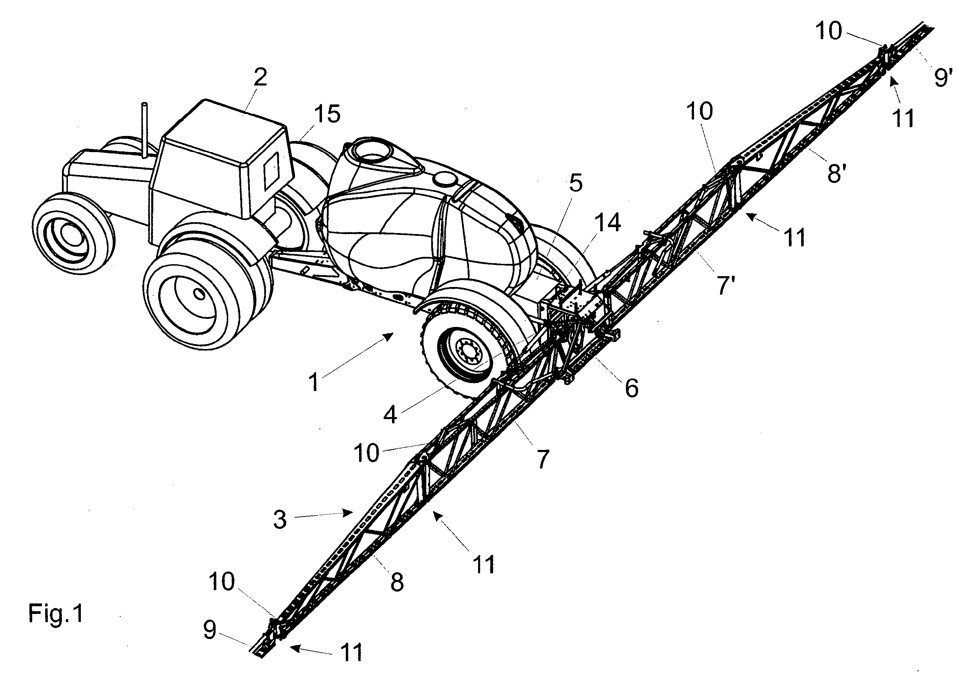

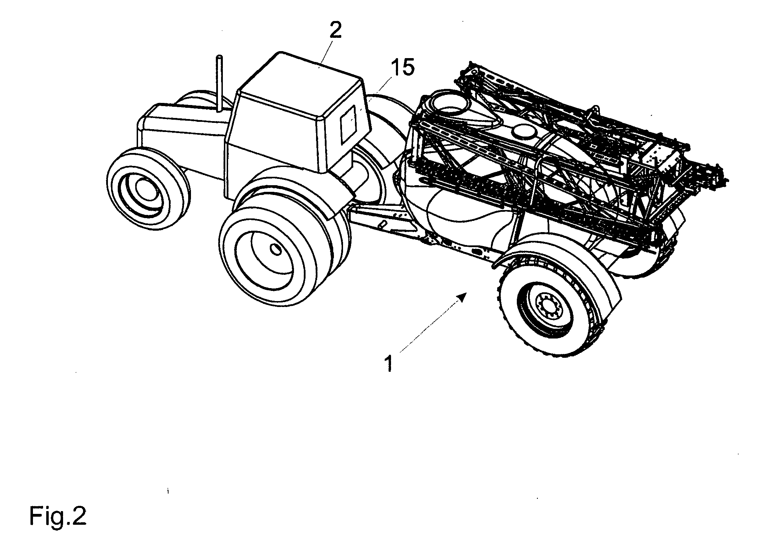

Das als gezogene landwirtschaftliche Feldspritze 1 ausgebildete landwirtschaftliche Gerät ist über eine Anhängevorrichtung an einen Ackerschlepper 2 angekoppelt. Die Feldspritze 1 weist auf ihrer Rückseite ein Verteilergestänge 3 auf, welches über eine Kuppeleinrichtung 4 an dem rückwärtigen Ende des Rahmens 5 der Feldspritze 1 in Höhenrichtung verstellbar angeordnet ist. Das Verteilergestänge 3 besteht aus einem mittleren Gestängeabschnitt 6 und mehreren gelenkig miteinander verbundenen Gestängeabschnitten 7, 7', 8, 8', 9, 9'. Der jeweilige innerste Gestängeabschnitt 7, 7' ist gelenkig an dem mittleren Gestängeabschnitt 6 angeordnet. Zwischen den einzelnen zueinander einklappbaren Gestängeabschnitten 7, 7', 8, 8', 9, 9' sowie zwischen dem jeweils innersten Gestängeabschnitt 7, 7' und dem mittleren Gestängeabschnitt 6 sind motorischen Stellelemente 10, die hier als doppeltwirkende Hydraulikzylinder ausgebildet sind, zum verbringen der Gestängeabschnitte 7, 7', 8, 8', 9, 9' in einer erste Klappstellung, die der Arbeitsstellung gemäß Fig. 1 entspricht und in eine zweite Klappstellung, in der die zueinander einklappbaren Gestängeabschnitte in zusammengeklappter Weise, die der Transportstellung gemäß Fig. 2 entspricht, angeordnet.

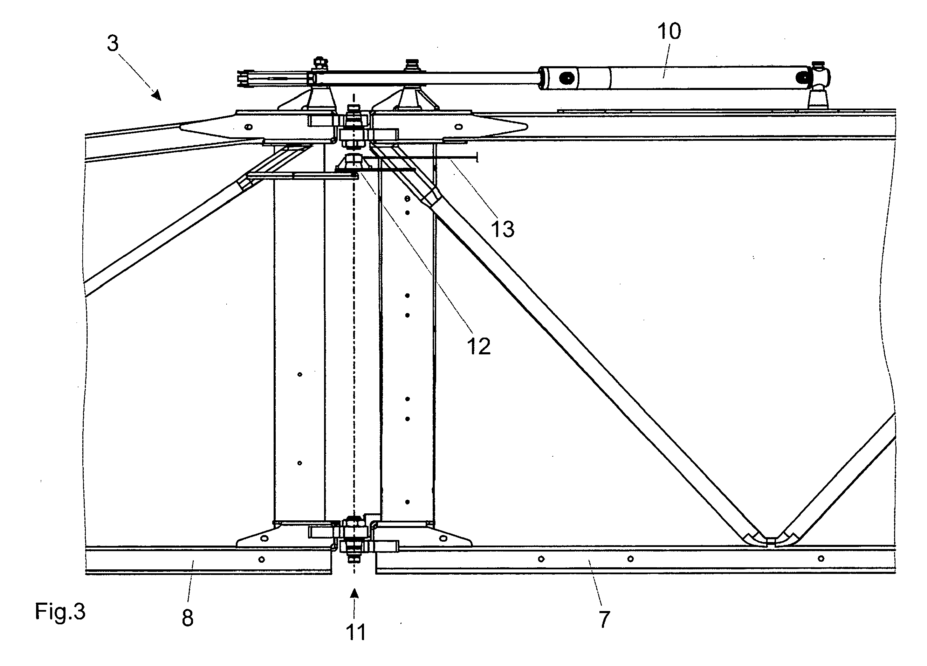

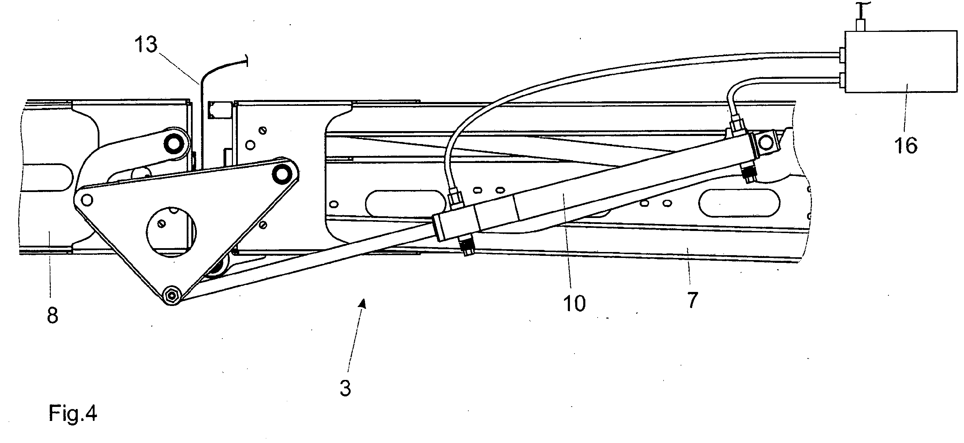

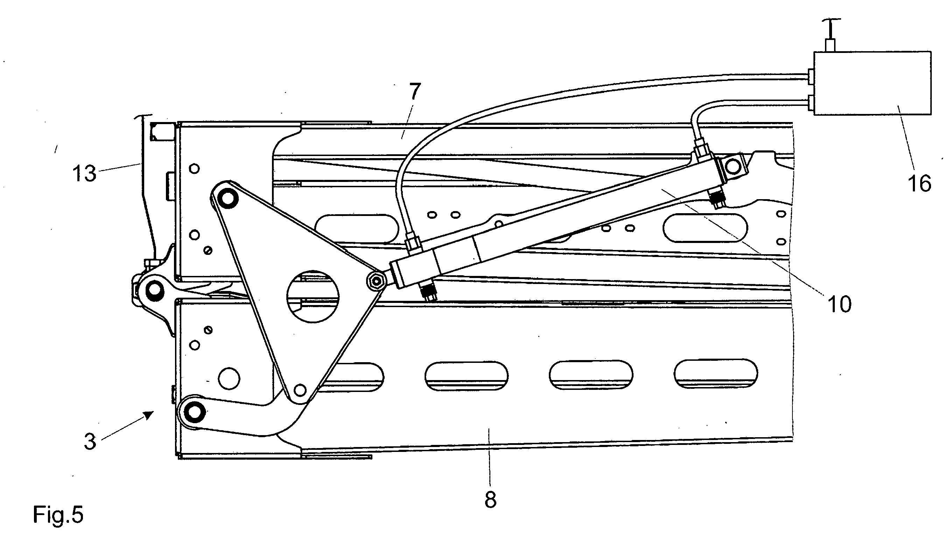

Die einzelnen aneinander anschließenden Gestängeabschnitte 7, 7', 8, 8', 9, 9' sind miteinander über Gelenke 11 miteinander verbunden. Im Bereich der Gelenke sind als Potentiometer 12 ausgebildete Sensorelemente zur Erfassung der jeweiligen Positionen der zueinander einklappbaren Gestängeabschnitte 7, 7', 8, 8', 9, 9' zueinander angeordnet, wie Fig. 3 zeigt. Die Potentiometer 12 sind also jeweils den Gelenken 11 zwischen zwei zueinander einklappbaren Gestängeabschnitten 7, 7', 8, 8', 9, 9' zugeordnet und somit zwischen zwei zueinander einklappbaren Gestängeabschnitten 7, 7', 8, 8', 9, 9' angeordnet. Bei dem Ausführungsbeispiel gemäß den Fig. 1-5 sind die Sensorelemente 12 also als Drehpotentiometer ausgebildet. Die Potentiometer 12 erfassen die jeweilige Winkelstellung der einander benachbarten Gestängeabschnitte 7, 7', 8, 8', 9, 9' zueinander. Über Datenleitungen 13 übermitteln die Sensorelemente 12 die jeweiligen Positionssignale an eine elektronische Steuer- und Regeleinrichtung 14, die mit einem auf dem Schlepper 2 angeordneten Bordcomputer 15 verbunden ist. Die Sensorelemente 12 erfassen neben den jeweiligen Endlagen der Gestängeabschnitte 7, 7', 8, 8', 9, 9', die diese in Arbeitsstellung bzw. in zusammengeklappter Weise, die der Transportstellung entspricht, auch mehrere Positionen zwischen den jeweiligen Endlagen (Transport- und Arbeitsstellung), wobei in den beiden Endlagen (Transport- und Arbeitsstellung) die Sensorelemente 12 jeweils ein Endlagensignal übermitteln. Auch die Zwischenpositionen werden kontinuierlich oder in zeitlicher Abfolge und/oder winkelabhängiger Weise, beispielsweise taktweise an die elektronische Steuer- und Regeleinrichtung 14 übermittelt.

Die Steuereinrichtung 14, welche Hydraulikventile 16 der doppeltwirkenden Hydraulikzylinder 10 zu deren Betätigung ansteuert, ist derart ausgelegt, dass aufgrund der von den Sensorelementen 12 übermittelten Positionssignale bezüglich der Stellung der zueinander einklappbaren Gestängeabschnitte 7, 7', 8, 8', 9, 9' zueinander die von den motorischen Stellelemente 10 erzeugte Klappgeschwindigkeit veränderbar ist und zwar derart, dass zu Beginn des Klappvorganges eine Beschleunigungsphase 17 der Klappbewegung und zum Ende des Klappvorganges eine Verzögerungsphase 18 der Klappbewegung vorgesehen ist. Weiterhin weist die Steuereinrichtung 14 nicht dargestellte Einstellmittel auf, mittels welcher die von den jeweiligen Hydraulikzylindern 10 erzeugte Klappgeschwindigkeit einzustellen bzw. zu verändern ist.

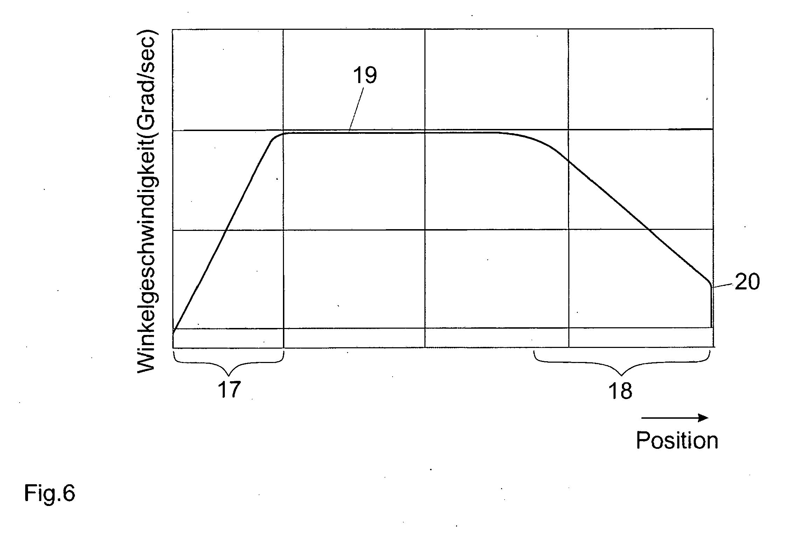

Wie das Diagramm gemäß Fig.6 zeigt wird zu Beginn des Klappvorganges in der Beschleunigungsphase 17 die Klappbewegung auf die eigentliche relativ hohe Klappgeschwindigkeit 19 erhöht und in der Verzögerungsphase 18 von der hohen Klappgeschwindigkeit 19 auf eine sanfte Endeinklappphase 20 reduziert, damit der jeweilige Gestängeabschnitt 7, 7', 8, 8', 9, 9' schonend an den benachbarten Gestängeabschnitt 7, 7', 8, 8', 9, 9' ohne Beschädigungsgefahr heran geklappt werden kann.

Weiterhin können nicht dargestellte Temperatursensoren zur Messung der Öltemperatur des die Hydraulikzylinder Ölstromes vorgesehen sein. In Abhängigkeit der von den Temperatursensoren werden an die Steuervorrichtung 14 Signale geliefert, anhand derer eine Ansteuerung der Hydraulikzylinder derart erfolgt, dass der Einfluss der Öltemperatur kompensierbar ist. Somit lässt sich beim Einsatz von als Hydraulikzylinder 10 ausgebildeten Stellelementen der Temperatureinfluss in einfacher Weise kompensieren.

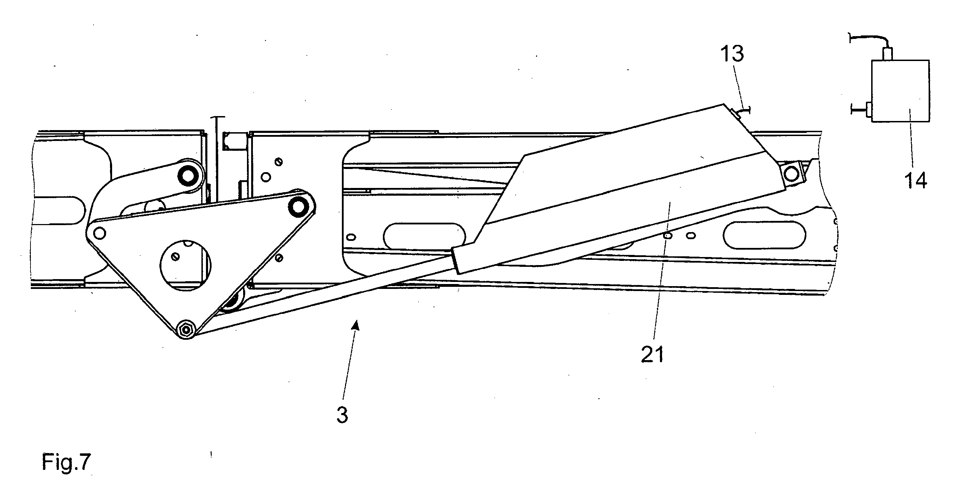

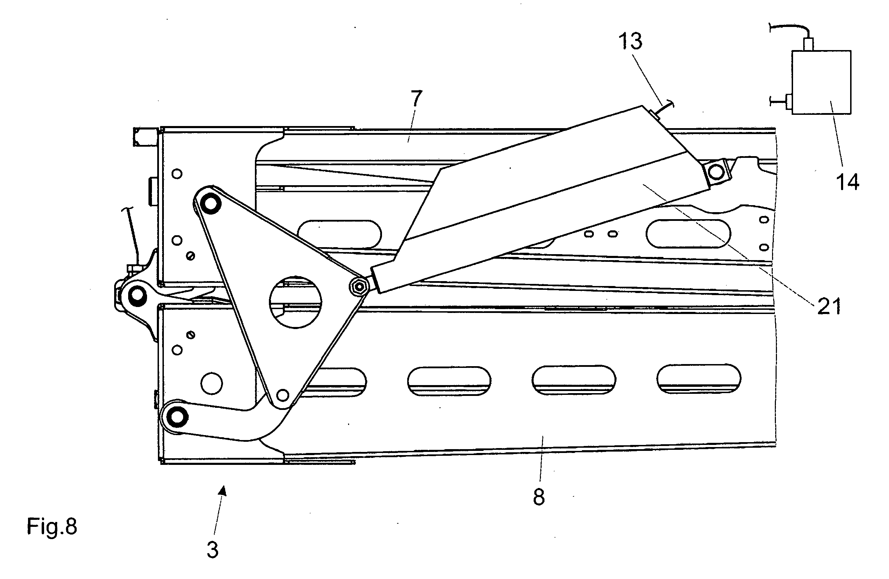

Das Verteilergestänge 3 gemäß den Fig. 7 und 8 unterscheidet sich von dem Verteilergestänge 3 gemäß den Fig. 1 bis 5 dadurch, dass die motorischen Stellelemente als elektrische Stellmotoren 21 ausgebildet sind. Weiterhin sind die Sensorelemente den Stellmotoren 21 in integrierter Weise zugeordnet. Die Sensorelemente übermitteln verschiedene Positionssignale des jeweiligen Stellungsmotore 21. Hieraus lässt sich die Position der jeweiligen Gestängeabschnitte 7, 7', 8, 8', 9, 9' zueinander herleiten. Die Stellmotore 21 sind in ihrer Stellgeschwindigkeit einstellbar und/oder veränderbar.

Die Sensoren, die beispielsweise als Dreh- und/oder den Linearpotentiometer ausgebildet sein können, übermitteln über Datenleitungen 13 Positionssignale ein die Steuereinrichtung 14. Aufgrund dieser Positionssignale werden die jeweiligen Stellmotore 21 entsprechend angesteuert, so dass die einander benachbarten Gestängeabschnitte 7, 7', 8, 8', 9, 9' entsprechend des Geschwindigkeitsverlaufes gemäß des Diagramms gemäß Fig. 6 ein- und ausgeklappt werden.

## Patentansprüche

1. Verteilergestänge (3) eines landwirtschaftlichen Gerätes (1) mit mehreren Gestängeabschnitten (6, 7, 7', 8, 8', 9, 9'), die gelenkig miteinander verbunden sind und jeweils mittels motorischer Stellelemente (10) um in Arbeitsstellung des Gestänges zumindest annähernd senkrecht verlaufende Schwenkachse in eine ausgeklappte Arbeitsstellung und eine zusammengeklappte Transportstellung bringbar sind, wobei im Bereich der Gelenke Sensorelemente (12) zur Erfassung der Position der zueinander einklappbaren Gestängeabschnitte (7, 7', 8, 8', 9, 9') angeordnet sind, wobei die Sensorelemente (12) Positionssignale für die Ein- und Ausklappposition erzeugen und an eine Steuervorrichtung (14) liefern, welche in Abhängigkeit der gelieferten Positionssignale die motorischen Stellelemente (10) für den Ein- und Ausklappvorgang ansteuern, **dadurch gekennzeichnet, dass** die Sensorelemente (12) mehrere Positionssignale zwischen den jeweiligen Endlagensignale erfassen und an die Steuereinrichtung (14) übermitteln, dass die Steuereinrichtung Einstellmittel aufweist, dass mittels dieser Einstellmittel die von den motorischen Stellenelementen erzeugte Klappgeschwindigkeit einstellbar und/oder veränderbar ist.

2. Verteilergestänge nach Anspruch 1, **dadurch gekennzeichnet, dass** die Sensorelemente als Potentiometer (12) ausgebildet sind.

3. Verteilergestänge nach Anspruch 2, **dadurch gekennzeichnet, dass** die Sensorelemente (12) als Linearpotentiometer (12) ausgebildet sind.

4. Verteilergestänge nach einer oder mehreren der vorstehenden Ansprüche, **dadurch gekennzeichnet, dass** die Sensorelemente (12) insbesondere die Potentiometer (12) jeweils den Gelenken (11) zwischen zwei zueinander einklappbaren Gestängeabschnitten (7, 7', 8, 8', 9, 9') zugeordnet sind.

5. Verteilergestänge nach einer oder mehreren der vorstehenden Ansprüche, **dadurch gekennzeichnet, dass** die Sensorelemente (12), insbesondere die Potentiometer (12) jeweils den Stellelementen (10, 21) zwischen zwei zueinander einklappbaren Gestängeabschnitten (7, 7', 8, 8', 9, 9') angeordnet sind.

6. Verteilergestänge nach einer oder mehreren der vorstehenden Ansprüche, **dadurch gekennzeichnet, dass** die Steuervorrichtung (14) derart ausgelegt ist, dass aufgrund der von den Sensorelementen (12) übermittelten Positionssignale bezüglich der Stellung der zueinander einklappbaren Gestängeabschnitte (7, 7', 8, 8', 9, 9') zueinander die von den motorischen Stellelemente (10, 21) erzeugte Klappgeschwindigkeit veränderbar ist und zwar derart, dass zu Beginn des Klappvorganges eine Beschleunigungsphase (17) der Klappbewegung und zum Ende des Klappvorganges eine Verzögerungsphase (18) der Klappbewegung vorgesehen ist.

7. Verteilergestänge nach einer oder mehreren der vorstehenden Ansprüche, **dadurch gekennzeichnet, dass** die motorischen Stellelemente als Hydraulikzylinder (10) ausgebildet sind, dass Temperatursensoren zur Messung der Öltemperatur des die Hydraulikzylinder Ölstromes vorgesehen sind, dass in Abhängigkeit der von den Temperatursensoren an die Steuervorrichtung (14) gelieferten Signale eine Ansteuerung der Hydraulikzylinder (10) derart erfolgt, dass der Einfluss der Öltemperatur kompensierbar ist.

## Claims

1. Distribution boom (3) of an agricultural implement (1) having a plurality of boom sections (6, 7, 7', 8, 8', 9, 9'), which are connected to one another in an articulated fashion and can each be moved by means of motor-operated actuating elements (10) into a folded-out working position and a folded-up transportation position about a pivoting axis which extends at least approximately perpendicularly in the working position of the boom, wherein sensor elements (12) for detecting the position of the boom sections (7, 7', 8, 8', 9, 9') which can be folded in with respect to one another are arranged in the region of the joints, wherein the sensor elements (12) generate position signals for the folded-in and folded-out positions and supply said position signals to a control device (14) which controls the motor-operated actuating elements (10) for the folding-in and folding-out processes as a function of the supplied position signals, **characterized in that** the sensor elements (12) detect a plurality of position signals between the respective end position signals and transmit them to the control device (14), **in that** the control device has setting means, **in that** by means of these setting means it is possible to set and/or change the folding speed which is generated by the motor-operated actuating elements.

2. Distribution boom according to Claim 1, **characterized in that** the sensor elements are embodied as potentiometers (12).

3. Distribution boom according to Claim 2, **characterized in that** the sensor elements (12) are embodied as linear potentiometers (12).

4. Distribution boom according to one or more of the preceding claims, **characterized in that** the sensor elements (12), in particular the potentiometers (12), are each assigned to the joints (11) between two boom sections (7, 7', 8, 8', 9, 9') which can be folded in with respect to one another.

5. Distribution boom according to one or more of the preceding claims, **characterized in that** the sensor elements (12), in particular the potentiometers (12) are each arranged on the actuating elements (10, 21) between two boom sections (7, 7', 8, 8', 9, 9') which can be folded in with respect to one another.

6. Distribution boom according to one or more of the preceding claims, **characterized in that** the control device (14) is designed in such a way that the folding speed which is generated by the motor-operated actuating elements (10, 21) can be changed on the basis of the position signals, transmitted by the sensor elements (12), relating to the relative position of the boom sections (7, 7', 8, 8', 9, 9') which can be folded in with respect to one another, it being specifically possible to change said folding speed in such a way that at the start of the folding process an acceleration phase (17) of the folding movement is provided and at the end of the folding process a deceleration phase (18) of the folding movement is provided.

7. Distribution boom according to one or more of the preceding claims, **characterized in that** the motor-operated actuating elements are embodied as hydraulic cylinders (10), **in that** temperature sensors for measuring the oil temperature of the oil flow to the hydraulic cylinders are provided, **in that** actuation of the hydraulic cylinders (10) takes place as a function of the signals supplied by the temperature sensors to the control device (14), in such a way that the influence of the oil temperature can be compensated.

## Revendications

1. Rampe de pulvérisation (3) d'un appareil agricole (1) dotée de plusieurs sections de rampe (6, 7, 7', 8, 8', 9, 9') reliées entre elles de façon articulée et pouvant respectivement être amenées dans une position de travail déployée et dans une position de transport rabattue à l'aide d'éléments de réglage (10) motorisés en pivotant autour de l'axe de pivotement s'étendant au moins approximativement perpendiculairement dans la position de travail de la rampe, des éléments de détection (12) étant disposés dans la zone des articulations pour détecter la position des sections de rampe (7, 7', 8, 8', 9, 9') pouvant être rabattues les unes par rapport aux autres, les éléments de détection (12) émettant des signaux de position pour la position rabattue et déployée et les envoyant à un dispositif de commande (14) excitant les éléments de réglage (10) motorisés des processus de rabattement et déploiement en fonction des signaux de position envoyés, **caractérisée en ce que** les éléments de détection (12) détectent plusieurs signaux de position entre les signaux de positions d'extrémité respectifs et les transmettent au dispositif de commande (14), que le dispositif de commande comporte des moyens de réglage, que la vitesse de rabattement produite par les éléments de réglage motorisés est réglable et/ou modifiable par le biais de ces moyens de réglage.

2. Rampe de pulvérisation selon la revendication 1, **caractérisée en ce que** les éléments de détection prennent la forme de potentiomètres (12).

3. Rampe de pulvérisation selon la revendication 2, **caractérisée en ce que** les éléments de détection (12) prennent la forme de potentiomètres linéaires (12).

4. Rampe de pulvérisation selon l'une quelconque des revendications précédentes ou plusieurs d'entre elles, **caractérisée en ce que** les éléments de détection (12), notamment les potentiomètres (12), sont respectivement associés aux articulations (11) placées entre deux sections de rampe (7, 7', 8, 8', 9, 9') pouvant être rabattues ensemble.

5. Rampe de pulvérisation selon l'une quelconque des revendications précédentes ou plusieurs d'entre elles, **caractérisée en ce que** les éléments de détection (12), notamment les potentiomètres (12), sont respectivement disposés aux éléments de réglage (10, 21) disposés entre deux sections de rampe (7, 7', 8, 8', 9, 9') pouvant être rabattues ensemble.

6. Rampe de pulvérisation selon l'une quelconque des revendications précédentes ou plusieurs d'entre elles, **caractérisée en ce que** le dispositif de commande (14) est conçu de telle sorte que, sur la base des signaux de position transmis par les éléments de détection (12), la vitesse de rabattement produite par les éléments de réglage (10, 21) motorisés peut varier par rapport à la position les unes par rapport aux autres des sections de rampe (7, 7', 8, 8', 9, 9') pouvant être rabattues ensemble et notamment de telle sorte qu'une phase d'accélération (17) du mouvement de rabattement est prévue au début du processus de rabattement et qu'une phase de ralentissement (18) du mouvement de rabattement est prévue à la fin du processus de rabattement.

7. Rampe de pulvérisation selon l'une quelconque des revendications précédentes ou plusieurs d'entre elles, **caractérisée en ce que** les éléments de réglage motorisés prennent la forme de vérins hydrauliques (10), que des capteurs de température sont prévus pour mesurer la température d'huile du flux d'huile dans les vérins hydrauliques, qu'une excitation des vérins hydrauliques (10) se produit en fonction des signaux envoyés au dispositif de commande (14) par les capteurs de température de façon à permettre de compenser l'influence de la température d'huile.
